# EUROPÄISCHE PATENTANMELDUNG

(11) **EP 2 006 591 A1**
(43) Veröffentlichungstag der Anmeldung: **24.12.2008**
(21) Anmeldenummer: 07012051.4
(22) Anmeldetag: 20.06.2007
(51) Int. Cl.: F16L 27/11, F16L 51/02

(54) **Kompensationselement für Rohrleitungen**

(71) Anmelder: Boa AG, 6023 Rothenburg (CH)
(72) Erfinder: Dräyer, Hans Rudolf, 6023 Rothenburg (CH); Amor, Adel, 6020 Emmenbrücke (CH)
(74) Vertreter: Schalch, Rainer

(57) **Zusammenfassung**

Die Erfindung betrifft ein Kompensationselement zum Ausgleich von Längenänderungen oder eines Versatzes in Rohrleitungen. Das Kompensationselement umfasst ein dünnwandiges Wellrohrteil (1), welches an beiden Enden mit einem flanschartigen Anschlussteil (2) verbunden ist, das der Ermöglichung einer bevorzugterweise lösbaren Ankopplung an eine Rohrleitung dient. Das Wellrohrteil (1) ist mit dem jeweiligen Anschlussteil (2) auf der Innenseite des Kompensationselements stoffschlüssig verbunden, derart, dass diese zusammen mit der Fügestelle (8) auf der Innenseite des Kompensationselements eine durchgehende, geschlossene Oberfläche bilden.

Derartige Kompensationselemente lassen sich im Vergleich mit den heute bekannten Kompensationselementen problemlos und rückstandsfrei reinigen und erfüllen höchste Ansprüche betreffend Hygiene, Kontaminationsfreiheit und Dauerhaftigkeit.

## Beschreibung

Die vorliegende Erfindung betrifft ein Kompensationselement sowie ein Verfahren zu dessen Herstellung gemäss den Oberbegriffen der unabhängigen Ansprüche.

Derartige Kompensationselemente dienen dem Ausgleich von Längenänderungen und Fehlausrichtungen (Versätzen) in Rohrleitungen, welche z.B. durch Temperaturunterschiede, Montageunstimmigkeiten oder Fundamentsenkungen hervorgerufen sein können, sowie, je nach Anwendung, zudem auch dem schwingungstechnischen Entkoppeln von über Rohrleitungen miteinander verbundenen Systemen. Typische Verwendungsgebiete dieser Kompensatoren sind der allgemeine Rohrleitungsbau sowie der Anlagenbau mit den Schwerpunkten Kraftwerkstechnik, Maschinenbau (insbesondere Verbrennungsmotoren/Turbinen/Kompressoren), chemische/pharmazeutische Industrie sowie Lebensmittelindustrie. Typische in den Kompensationselementen bzw. den damit verbundenen Rohrleitungen geführte Medien sind Wasser, Dampf, Benzin, Öl, chemische Produkte, flüssige Lebensmittel bzw. -bestandteile. Auch Vakuumanwendungen sind bekannt.

Insbesondere in der chemischen/pharmazeutischen Industrie, in der Lebensmittelindustrie und in der Vakuumtechnik ergibt sich bei den heute bekannten gattungsgemässen Kompensationselementen das Problem, dass sich Rückstände bzw. Verunreinigungen festsetzen können und dann im Laufe der Zeit zu Problemen betreffend die Hygiene/Reinheit und/oder zu Korrosionsproblemen führen können.

Es stellt sich daher die Aufgabe, ein Kompensationselement und ein Verfahren zu dessen Herstellung zur Verfügung zu stellen, welche die Nachteile des Standes der Technik nicht aufweisen oder zumindest teilweise vermeiden.

Diese Aufgabe wird durch das Kompensationselement und das Herstellverfahren gemäss den unabhängigen Patentansprüchen gelöst.

Demgemäss betrifft ein erster Aspekt der Erfindung ein Kompensationselement zum Ausgleich von Längenänderungen oder eines Versatzes (Fehlausrichtung) in Rohrleitungen. Das Kompensationselement umfasst ein dünnwandiges Wellrohrteil, welches an einem oder an beiden Enden mit einem flanschartigen Anschlussteil verbunden ist, welches wiederum der Ermöglichung einer bevorzugterweise lösbaren Ankopplung an eine Rohrleitung dient. Dabei ist das Wellrohrteil mit dem jeweiligen Anschlussteil auf der Innenseite des Kompensationselements an einer Fügestelle stoffschlüssig verbunden, derart, dass diese zusammen mit der Fügestelle auf der Innenseite des Kompensationselements eine durchgehende, geschlossene Oberfläche bilden. Eine solche Oberfläche ist frei von Spalten und Löchern und weist zudem keine sprunghaften Reliefveränderungen auf.

Derartige Kompensationselemente lassen sich im Vergleich mit den heute bekannten Kompensationselementen problemlos und rückstandsfrei reinigen und erfüllen damit höchste Ansprüche betreffend Hygiene, Kontaminationsfreiheit und Dauerhaftigkeit.

In einer bevorzugten Ausführungsform des Kompensationselements weisen das Wellrohrteil und das flanschartige Anschlussteil im wesentlichen identische lichte Durchtrittsquerschnitte auf, und zwar bevorzugterweise im wesentlichen identische lichte Innendurchmesser. Unter im wesentlichen identischen lichten Durchtrittsquerschnitten werden lichte Durchtrittsquerschnitte verstanden, welche dieselbe Querschnittsform und um höchstens 5% voneinander abweichende Querschnittsflächen aufweisen. Hierdurch wird eine optimale Strömungsführung im Kompensationselement ermöglicht.

In einer weiteren bevorzugten Ausführungsform des Kompensationselements ist zwischen der dem jeweiligen flanschartigen Anschlussteil nächstgelegenen Rohrwelle des Wellrohrteils und dem flanschartigen Anschlussteil ein Abstand vorhanden, der grösser ist als der Abstand zwischen den Kämmen zweier benachbarter Rohrwellen des Wellrohrteils. Durch diesen Abstand ist es möglich, Befestigungsmittel, wie z.B. Schrauben, Muttern oder Spannhaken, auf der dem Wellrohrteil zugewandten Seite des Anschlussteils anzuordnen, zwecks Befestigung des Kompensationselements an einer Rohrleitung.

In noch einer weiteren bevorzugten Ausführungsform des Kompensationselements ist der Bereich zwischen der dem Anschlussteil nächstliegenden Rohrwelle des Wellrohrteils und dem flanschartigen Anschlussteil durch einen vom Wellrohrteil gebildeten Rohrstutzen gebildet, welcher bevorzugterweise im wesentlichen zylindrisch, d.h. beispielsweise rein zylindrisch, gestuft zylindrisch mit bevorzugterweise konischen Übergängen oder leicht konisch ist. Insbesondere bei Ausführungsformen aus Metall lassen sich dadurch, dass dieser Rohrstutzen Stutzen vom dünnwandigen Wellrohrteil bereitgestellt wird, welcher üblicherweise durch Umformung und anschliessendes Verschweissen eines Blechbandes gebildet wird, die Herstellkosten auf ein Minimum senken, da das flanschartige Anschlussteil, welches üblicherweise als Drehteil durch zerspanende Bearbeitung erzeugt wird, hierdurch auf die eigentliche Flanschpartie reduziert werden kann.

In noch einer weiteren bevorzugten Ausführungsform des Kompensationselements überlappen sich der Wellrohrteil und der flanschartige Anschlussteil in axialer Richtung, und zwar bevorzugterweise derart, dass der Wellrohrteil und bevorzugterweise ein von diesem gebildeter Rohrstutzen axial in den flanschartigen Anschlussteil eintritt oder über diesen geschoben ist. Hierdurch wird eine einfache Herstellung der erfindungsgemässen Kompensationselemente und eine hohe Fertigungspräzision begünstigt, da bei geeigneter konstruktiver Ausgestaltung durch ein axiales Zusammenschieben von Wellrohrteil und flanschartigem Anschlussteil automatisch eine radiale Ausrichtung dieser Bauteile zueinander erreicht werden kann.

In noch einer weiteren bevorzugten Ausführungsform des Kompensationselements ist der Wellrohrteil an seinem in axialer Richtung gesehen äussersten Ende stoffschlüssig mit dem flanschartigen Anschlussteil verbunden. Auf diese Weise werden besonders einfache konstruktive Ausgestaltungen möglich.

In noch einer weiteren bevorzugten Ausführungsform des Kompensationselements ist auf der Innenseite des Kompensationselements der Übergang vom flanschartigen Anschlussstück auf den Wellrohrteil im wesentlichen stufenlos. Die Innenquerschnitte des Wellrohrteils und des flanschartigen Anschlussstücks weisen also im Übergangsbereich einen praktisch identischen Querschnitt sowohl bezüglich der Querschnittsform als auch bezüglich der Querschnittsfläche auf, was eine verlustarme Strömungsführung begünstigt.

Mit Vorteil kommt bei den erfindungsgemässen Kompensationselementen ein parallel gewelltes Wellrohrteil mit einer Vielzahl paralleler Rohrwellen zum Einsatz, welches der Vorteil aufweist, dass geometrisch einfache und exakt definierte Übergänge vom eigentlichen Wellenteil auf einen etwaigen daran anschliessenden Rohrstutzen bzw. an das flanschartige Anschlussteil möglich sind. Es ist aber ebenso vorgesehen, ein ein- oder mehrgängig schraubenförmig gewelltes Wellrohrteil zu verwenden.

Bevorzugterweise bestehen die erfindungsgemässen Kompensationselemente aus Metall, insbesondere aus rostfreiem Stahl, wobei jedoch ebenfalls Ausführungsformen vorgesehen sind, bei denen diese aus Kunststoff gebildet sind, insbesondere aus PVC. Diese Materialien sind beständig und lassen sich durch Schweissen stoffschlüssig miteinander verbinden, was eine bevorzugte Methode für die Herstellung der Verbindung zwischen dem Wellrohrteil und dem flanschartigen Anschlussteil ist. Bei Ausführungen aus Metall sind auch Lötverbindungen und bei Ausführungen aus Kunststoff auch Klebeverbindungen als stoffschlüssige Verbindungen vorgesehen.

Dabei ist es bei Kompensationselementen aus Metall bevorzugt, wenn diese durch TIG-Schweissen (Tungsten Inert Gas - Schweissen) oder Laserschweissen miteinander verbunden sind, da sich mit diesen Fügemethoden extrem feine, porenfreie Schweissnähte erzeugen lassen, was zudem auch ohne Zuführung von Fremdmaterial möglich ist mit dem Effekt, dass etwaige Verunreinigungen durch Schweisshilfs- bzw. Zusatzstoffe von vornherein ausgeschlossen werden können.

Ein zweiter Aspekt der Erfindung betrifft ein Verfahren zur Herstellung des Kompensationselements gemäss dem ersten Aspekt der Erfindung, welches durch die folgenden Verfahrensschritte gekennzeichnet ist:
a) Bereitstellen eines Wellrohrteils und eines zugeordneten, d.h. darauf angepassten flanschartigen Anschlussteils;
b) Anordnen des flanschartigen Anschlussteils an einem Ende des Wellrohrteils; und
c) stoffschlüssiges Verbinden des Wellrohrteils mit dem flanschartigen Kompensationselement über eine Fügestelle, z.B. durch Verschweissen, Verlöten oder Verkleben, derart, dass diese auf der Innenseite des durch sie gebildeten Kompensationselements zusammen mit der stoffschlüssigen Fügestelle eine durchgehende, geschlossene Oberfläche bilden.

Durch das erfindungsgemässe Verfahren lassen sich erfindungsgemässe Kompensationselemente auf einfache und kostengünstige Weise herstellen.

Dabei ist es bevorzugt, dass beim Anordnen des flanschartigen Anschlussteils am Ende des Wellrohrteils beide Teile axial ineinander eingeschoben werden, bevorzugterweise indem ein vom Wellrohrteil gebildeter Rohrstutzen über das flanschartige Anschlussteil geschoben wird oder in das flanschartige Anschlussteil eingeschoben wird, wobei bevorzugterweise gleichzeitig der Wellrohrteil und der flanschartige Anschlussteil radial zueinander ausgerichtet werden.

Weiter ist es bevorzugt, wenn das stoffschlüssige Verbinden von Wellrohrteil und flanschartigem Anschlussteil durch Verschweissen, insbesondere durch TIG-Schweissen oder Laserschweissen erfolgt, da diese Verfahren vollautomatisierbar sind, extrem feine und glatte Schweissnähte ermöglichen und ohne Zuführung von Zusatzwerkstoffen durchführbar sind, wodurch eine Verschmutzung bzw. Kontamination über solche Zusatzwerkstoffe von vornherein ausgeschlossen werden kann.

Ein derartiges Verfahren, bei dem das Verschweissen von Wellrohrteil und flanschartigem Anschlussteil ausschliesslich unter einem Aufschmelzen von Material des Wellrohrteils und des flanschartigen Anschlussteils erfolgt, d.h. ohne Zuführung eines Zusatzwerkstoffs, stellt eine bevorzugte Ausführungsform des erfindungsgemässen Verfahrens dar.

In einer weiteren bevorzugten Ausführungsform des Verfahrens, bei welcher beim Anordnen des flanschartigen Anschlussteils am Ende des Wellrohrteils beide Teile einander axial überdecken, z.B. indem ein Rohrstutzen des Wellrohrteils in das flanschartige Anschlussstück eingeschoben wird, werden beim Verschweissen das Wellrohrteil und das flanschartige Anschlussteil zumindest in dem Bereich, in welchem gerade geschweisst wird, radial aneinander angepresst. Dies erfolgt bevorzugterweise von innen her mittels einer im aktivierten Zustand feststehenden radialen Spreizvorrichtung oder mittels einer beim Verschweissen am Innenumfang abrollenden Andrückrolle. Hierdurch besteht in der Schweisszone praktisch kein radialer Spalt zwischen dem Wellrohrteil und dem flanschartigen Anschlussteil, welcher zu einer Fehlschweissung bzw. zu einem Durchbrennen des dünnwandigen Wellrohrteils in der Schweisszone führen könnte.

Weitere bevorzugte Ausführungen der Erfindung ergeben sich aus den abhängigen Ansprüchen und aus der nun folgenden Beschreibung anhand der Figuren. Dabei zeigen:
Fig. 1 einen Längsschnitt durch ein erfindungsgemässes Kompensationselement;
Fig. 2 das Detail A aus Fig. 1;
   die Figuren 3 bis 8 Darstellungen wie Fig. 2 von weiteren erfindungsgemässen Ausführungsformen;
Fig. 9 auf der linken Seite eine Vorderansicht auf und auf der rechten Seite einen Längsschnitt durch die obere Hälfte des Kompensationselements aus Fig. 1 beim Verschweissen des Wellrohrteils mit dem flanschartigen Anschlussteil gemäss einem ersten erfindungsgemässen Verfahren; und
Fig. 10 Darstellungen wie Fig. 9 beim Verschweissen des Wellrohrteils mit dem flanschartigen Anschlussteil gemäss einem zweiten erfindungsgemässen Verfahren.

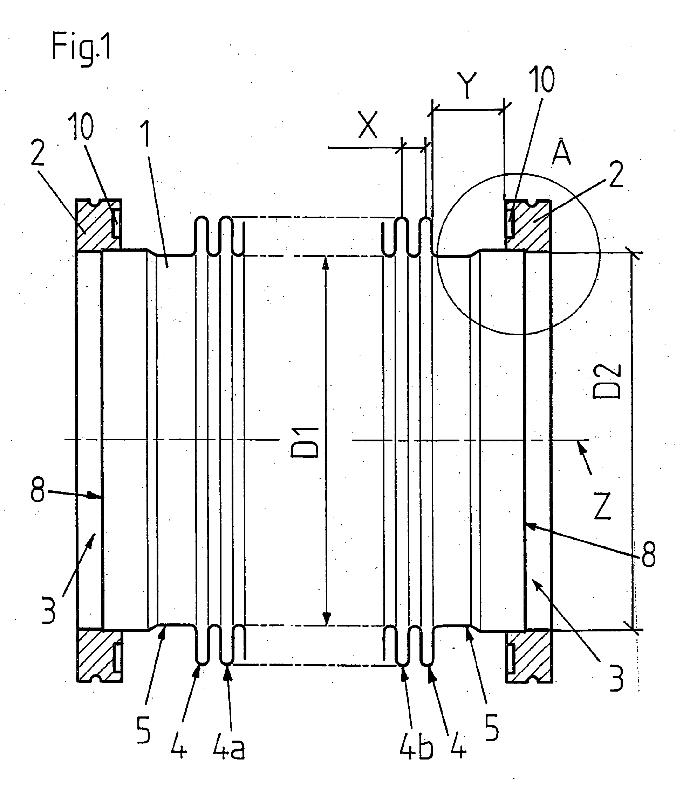

Eine erste bevorzugte Ausführungsform des erfindungsgemässen Kompensationselements ist in gekürzter Darstellung (siehe strichpunktierte Linien) im Längsschnitt in Fig. 1 dargestellt. Wie zu erkennen ist, besteht das Kompensationselement aus einem dünnwandigen Wellrohrteil 1 und zwei jeweils endseitig an diesem angeordneten flanschartigen Anschlussteilen 2. Der Wellrohrteil 1 besteht aus einem eigentlichen, parallel gewellten Wellenteil mit einer Vielzahl von parallelen Rohrwellen 4, 4a, 4b, und zwei jeweils endseitig an den Wellenteil anschliessenden und im wesentlichen zylindrischen Rohrstutzen 5. Er ist durch Umformen und anschliessendes Verschweissen aus einem Edelstahlblechstreifen gebildet worden.

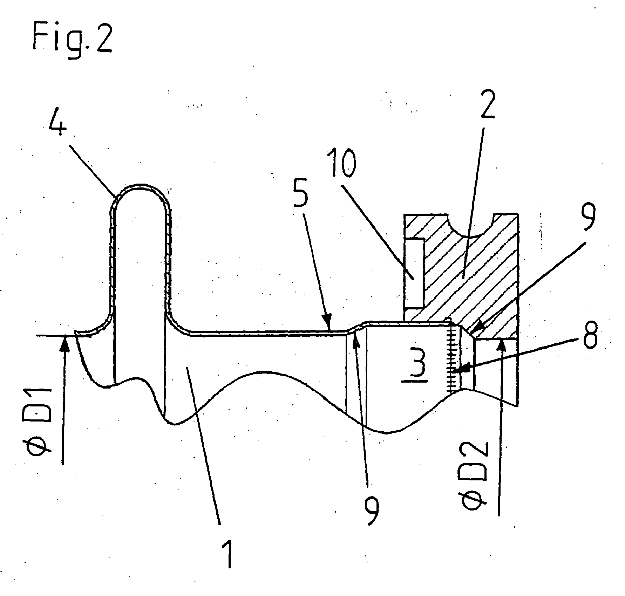

Wie in Zusammenschau mit Fig. 2 erkennbar ist, welche das Detail "A" aus Fig. 1 zeigt, sind die Rohrstutzen 5 mit ihren dem Wellenteil abgewandten Enden jeweils axial in eine entsprechende Ausdrehung in dem jeweils zugeordneten flanschartigen Anschlussteil 2 eingeschoben, so dass sich Wellrohrteil 1 und flanschartiges Anschlussteil 2 jeweils axial überlappen. Dabei sind die Rohrstutzen 5 jeweils an ihrem axial äussersten Ende auf der Innenseite des Kompensationselements mit dem zugeordneten flanschartigen Anschlussstück 2 derart verschweisst, dass das Wellrohrteil 1 und das flanschartige Anschlussteil 2 zusammen mit der Schweissnaht 8 (anspruchsgemässe Fügestelle) eine durchgehende, geschlossene Oberfläche 3 bilden. Wie weiter zu erkennen ist, sind die lichten Durchmesser D1, D2 des Wellrohrteils 1 und der flanschartigen Anschlussteile 2 praktisch identisch, so dass eine verlustarme Strömungsführung begünstigt wird. Im Übergangsbereich von dem Wellrohrteil 1 auf das jeweilige flanschartige Anschlussteil 2 weist das Kompensationselement jeweils einen geringfügig erweiterten Innendurchmesser auf, welcher jedoch über konische Wandbereiche 9 und ohne Bildung von Stufen in die Bereiche mit den kleineren lichten Innendurchmessern D1, D2 übergeht. Wie aus Fig. 1 ersichtlich ist, existiert jeweils zwischen dem flanschartigen Anschlussteil 2 und der diesem nächstliegenden Rohrwelle 4 des Wellrohrteils 2 ein Abstand Y, welcher ein Mehrfaches des Abstands X beträgt, der zwischen den Kämmen zweier benachbarter Rohrwellen 4, 4a existiert. Hierdurch ist es problemlos möglich, Befestigungshaken in die an den Anschlussteilen 2 dafür vorgesehenen Vertiefungen 10 einzuhängen.

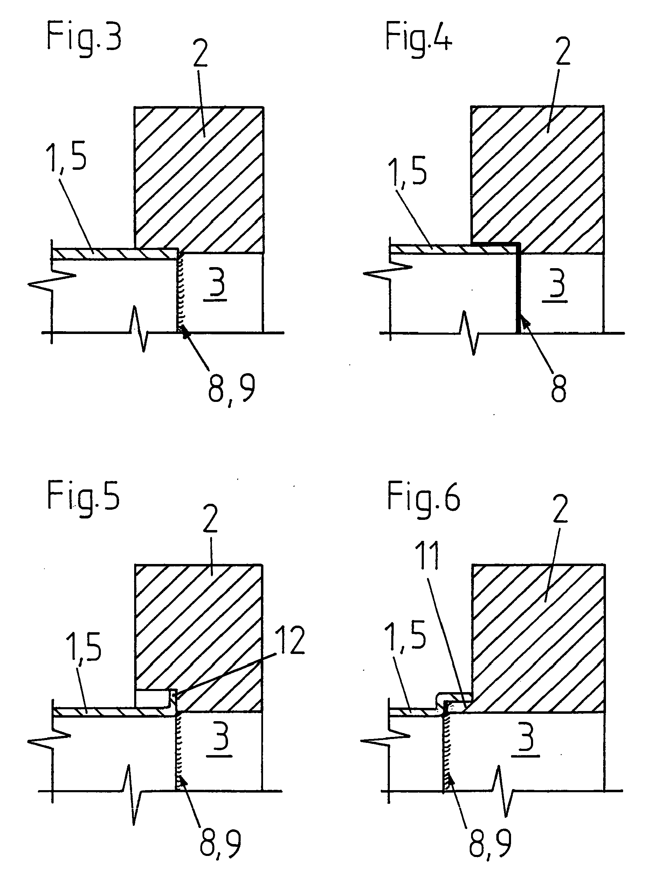

Die Figuren 3 bis 8 zeigen ähnliche Darstellung wie Fig. 2, also Längsschnitte durch einen oberen Teil eines Endes weiterer erfindungsgemässer Kompensationselemente, wobei mit den vorhergehenden Figuren gleiche Bezugsziffern Bauteile gleicher Funktion kennzeichnen.

Bei den in den Figuren 4-5 und 7-8 gezeigten Ausführungsformen ist ebenfalls jeweils ein vom Wellrohrteil 1 gebildeter Rohrstutzen 5 axial in eine zugeordnete Ausdrehung im zugeordneten flanschartigen Anschlussteil 2 eingeschoben, so dass sich beide Bauteile 1, 2 axial überlappen. Bei der in Fig. 6 gezeigten Ausführungsform übergreift der vom Wellrohrteil 1 gebildete Rohrstutzen 5 einen vom flanschartigen Anschlussteil 2 gebildeten Rand 11, so dass Wellrohrteil 1 und Anschlussteil 2 einander axial überlappen. Bei allen Ausführungsformen sind die Bauteile 1, 2 derartig ausgebildet, dass beim Herstellen der axialen Überlappung automatisch eine radiale Ausrichtung derselben zueinander erfolgt.

Dabei ist bei den Ausführungsformen gemäss den Figuren 3, 5 und 6 der Innendurchmesser der Rohrstutzens 5 geringfügig kleiner als der Innendurchmesser des flanschartigen Anschlussteils 2. Der Rohrstutzen 5 ist an seinem in axialer Richtung gesehen äusserten Ende mit dem Anschlussteil 2 verschweisst, derart, dass die als Schweissnaht ausgebildete Fügestelle 8 einen konischen Wandbereich 9 bildet, über welchen die beiden unterschiedlichen Innendurchmesser ohne Bildung von Stufen ineinander übergehen. Der einzige Unterschied zwischen den in den Figuren 3 und 5 dargestellten Ausführungsformen besteht darin, dass in Fig. 3 das Ende des Rohrstutzens 5 als einfacher Rohrabschnitt ausgebildet ist, während es in Fig. 5 einen flanschartigen Bördelrand 12 aufweist. Bei der Ausführungsform gemäss Fig. 6 ist das Ende des Rohrstutzens 5 im Innendurchmesser erweitert und nimmt den vom Anschlussteil 2 gebildeten Rand 11 in sich auf.

Die Ausführungsform gemäss Fig. 4 unterscheidet sich von derjenigen gemäss Fig. 3 lediglich darin, dass die Innendurchmesser des Rohrstutzens 5 und des flanschartigen Anschlussteils 2 identisch sind und die Fügestelle 8 als Lötverbindung ausgebildet ist.

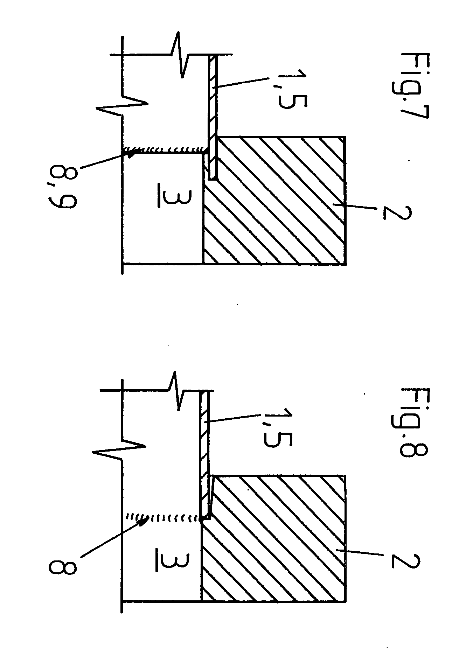

Die Ausführungsform gemäss Fig. 8 unterscheidet sich von derjenigen gemäss Fig. 3 lediglich darin, dass die Innendurchmesser des Rohrstutzens 5 und des flanschartigen Anschlussteils 2 identisch sind und die Ausdrehung im flanschartigen Anschlussteil 2, in welche der Rohrstutzen 5 axial eintritt, konisch ausgebildet ist, wodurch sich der Fertigungsprozess vereinfachen lässt, da das axiale Ineinanderschieben erleichtert wird und im zusammengeschobenen Zustand auf einfache Weise in dem Bereich, in welchem die Verschweissung erfolgen soll, eine radiale Vorspannung zwischen den Bauteilen 2, 5 erzeugbar ist.

Bei der Ausführungsform gemäss Fig. 7 tritt das als einfacher Rohrabschnitt ausgebildete Ende des Rohrstutzens 5 des Wellrohrteils 1 axial in einen kreisringförmigen Spalt im flanschartigen Anschlussteil 2 ein. Dabei ist der Innendurchmesser des Rohrstutzens 5 geringfügig grösser als der Innendurchmesser des Anschlussteils 2. Die Fügestelle 8 ist als Schweissnaht ausgebildet, welche gleichzeitig einen konischen Wandbereich 9 bildet, über welchen die beiden unterschiedlichen Innendurchmesser ohne Bildung von.Stufen ineinander übergehen.

Bei allen in den Figuren 1-8 dargestellten Ausführungsformen bilden der Wellrohrteil 1, das flanschartige Anschlussteil 2 und die stoffschlüssige Fügestelle 8 zusammen auf der Innenseite des Kompensationselements eine durchgehende geschlossene Oberfläche 3.

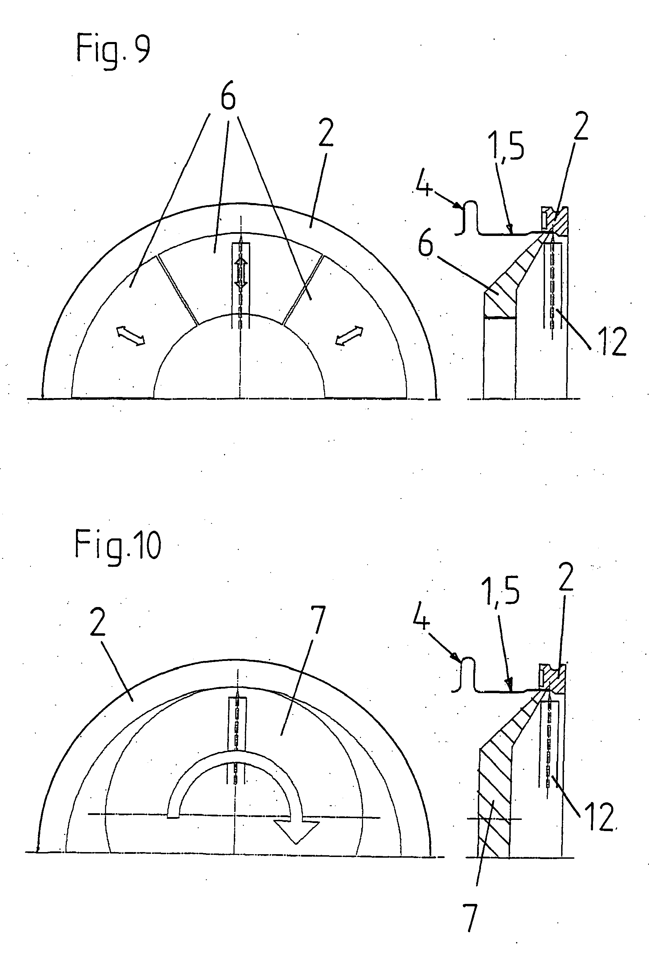

Fig. 9 zeigt auf der linken Seite eine Vorderansicht auf die obere Hälfte des Kompensationselements aus Fig. 1 und auf der rechten Seite einen Längsschnitt durch diese obere Hälfte beim Verschweissen des Rohrstutzens 5 des Wellrohrteils 1 mit dem flanschartigen Anschlussteil 2 gemäss einem ersten erfindungsgemässen Herstellungsverfahren. Dabei wird der Rohrstutzen 5 in einem Bereich, in welchem er axial innerhalb der Ausdrehung des flanschartigen Anschlussteils 2 angeordnet ist, von innen her mittels feststehender Spreizbacken 6 radial gegen das Anschlussteil 2 gepresst und sodann an seinem in axialer Richtung gesehen äussersten Ende mittels eines TIG-Schweissbrenners 12 ohne Verwendung eines Zusatzwerkstoffs mit dem flanschartigen Anschlussteil 2 verschweisst. Anschliessend werden die Spreizbacken 6 entfernt.

Fig. 10 zeigt Darstellungen wie Fig. 9 beim Verschweissen des Wellrohrteils mit dem flanschartigen Anschlussteil aus Fig. 1 gemäss einem zweiten erfindungsgemässen Verfahren. Dieses Verfahren unterscheidet sich von dem in Fig. 9 gezeigten lediglich dadurch, dass hier an Stelle von feststehenden Spreizbacken eine am Innenumfang des Rohrstutzens 5 abrollende Andrückrolle 7 verwendet wird und jeweils gerade an derjenigen Umfangsposition geschweisst wird, an welcher die Andrückrolle 7 gerade wirksam ist.

Auch wenn in den Figuren ausschliesslich Kompensationselemente mit kreisförmigem lichten Durchtrittsquerschnitt gezeigt sind ist die Erfindung nicht auf solche Ausführungsformen beschränkt, sondern kann ebenfalls auch für nicht kreisförmige, insbesondere gleichförmig vieleckige Querschnitte angewendet werden.

## Patentansprüche

1. Kompensationselement zum Ausgleich von Längenänderungen oder eines Versatzes in Rohrleitungen, umfassend ein dünnwandiges Wellrohrteil (1) und ein endseitig am Wellrohrteil (1) angeordnetes, flanschartiges Anschlussteil (2), **dadurch gekennzeichnet, dass** der Wellrohrteil (1) und der Anschlussteil (2) auf der Innenseite des Kompensationselements an einer Fügestelle (8) stoffschlüssig miteinander verbunden sind, derart, dass diese zusammen mit der Fügestelle (8) auf der Innenseite des Kompensationselements eine durchgehende, geschlossene Oberfläche (3) bilden.

2. Kompensationselement nach Anspruch 1, **dadurch gekennzeichnet, dass** das Wellrohrteil (1) und das flanschartige Anschlussteil (2) im wesentlichen identische lichte Durchtrittsquerschnitte aufweisen, insbesondere im wesentlichen identische lichte Innendurchmesser (D1, D2).

3. Kompensationselement nach einem der vorangehenden Ansprüche, **dadurch gekennzeichnet, dass** zwischen der dem Anschlussteil (2) nächstliegenden Rohrwelle (4) des Wellrohrteils (1) und dem flanschartigen Anschlussteil (2) ein Abstand (Y) grösser als der Abstand (X) zwischen den Kämmen von zwei benachbarten Rohrwellen des Wellrohrteils (1) vorhanden ist.

4. Kompensationselement nach einem der vorangehenden Ansprüche, **dadurch gekennzeichnet, dass** der Bereich zwischen einer dem Anschlussteil (2) nächstliegenden Rohrwelle (4) des Wellrohrteils (1) und dem flanschartigen Anschlussteil (2) durch einen insbesondere im wesentlichen zylindrischen Rohrstutzen (5) des Wellrohrteils (1) gebildet ist.

5. Kompensationselement nach einem der vorangehenden Ansprüche, **dadurch gekennzeichnet, dass** der Wellrohrteil (1) und der flanschartige Anschlussteil (2) einander axial überlappen, und insbesondere, dass der Wellrohrteil (1), und insbesondere ein von diesem gebildeter Rohrstutzen (5), axial in den flanschartigen Anschlussteil (2) eingeschoben oder über diesen geschoben ist.

6. Kompensationselement nach einem der vorangehenden Ansprüche, dass das Wellrohrteil (1) an seinem in axialer Richtung gesehen äussersten Ende stoffschlüssig mit dem flanschartigen Anschlussteil (2) verbunden ist.

7. Kompensationselement nach einem der vorangehenden Ansprüche, **dadurch gekennzeichnet, dass** auf der Innenseite des Kompensationselements der Übergang vom flanschartigen Anschlussstück (2) auf den Wellrohrteil (1) im wesentlichen stufenlos ist.

8. Kompensationselement nach einem der vorangehenden Ansprüche, **dadurch gekennzeichnet, dass** das Wellrohrteil (1) eine Vielzahl paralleler Rohrwellen (4, 4a, 4b) aufweist.

9. Kompensationselement nach einem der vorangehenden Ansprüche, **dadurch gekennzeichnet, dass** das Kompensationselement aus Metall ist, insbesondere aus rostfreiem Stahl.

10. Kompensationselement nach einem der vorangehenden Ansprüche, **dadurch gekennzeichnet, dass** die stoffschlüssige Verbindung eine Schweissverbindung ist, insbesondere eine durch TIG-Schweissen oder Laserschweissen hergestellte Schweissverbindung.

11. Verfahren zur Herstellung des Kompensationselements nach einem der vorangehenden Ansprüche, **gekennzeichnet durch** die Schritte:
a) Bereitstellen eines Wellrohrteils (1) und eines zugeordneten flanschartigen Anschlussteils (2);
b) Anordnen des flanschartigen Anschlussteils (2) an einem Ende des Wellrohrteils (1); und
c) stoffschlüssiges Verbinden des Wellrohrteils (1) mit dem flanschartigen Kompensationselement (2)über eine Fügestelle(8), derart, dass diese auf der Innenseite des **durch** sie gebildeten Kompensationselements zusammen mit der stoffschlüssigen Fügestelle (8) eine durchgehende, geschlossene Oberfläche bilden.

12. Verfahren nach Anspruch 11, **dadurch gekennzeichnet, dass** beim Anordnen des flanschartigen Anschlussteils (2) an dem Ende des Wellrohrteils (1) beide Teile axial ineinander eingeschoben werden, insbesondere ein vom Wellrohrteil (1) gebildeter Rohrstutzen (5) über das flanschartige Anschlussteil (2) geschoben oder in das flanschartige Anschlussteil (2) eingeschoben wird, insbesondere unter gleichzeitiger radialer Ausrichtung von Wellrohrteil (1) und Anschlussteil (2) zueinander.

13. Verfahren nach einem der Ansprüche 11 bis 12, **dadurch gekennzeichnet, dass** das stoffschlüssige Verbinden durch Verschweissen, insbesondere durch TIG-Schweissen oder Laserschweissen, erfolgt.

14. Verfahren nach Anspruch 13, **dadurch gekennzeichnet, dass** das Verschweissen ausschliesslich unter einem Aufschmelzen von Material des Wellrohrteils (1) und des flanschartigen Anschlussteils (2) erfolgt.

15. Verfahren nach Anspruch 12 und nach einem der Ansprüche 13 bis 14, **dadurch gekennzeichnet, dass** beim Verschweissen das Wellrohrteil (1) und das flanschartige Anschlussteil (2) radial aneinander angepresst werden, insbesondere von innen her mittels einer im aktivierten Zustand feststehenden radialen Spreizvorrichtung (6) oder mittels einer beim Verschweissen am Innenumfang abrollenden Andrückrolle (7).
